# EUROPEAN PATENT SPECIFICATION

(11) **EP 0 786 163 B1**
(45) Date of publication and mention of the grant of the patent: **15.07.1998**
(21) Application number: 95933513.4
(22) Date of filing: 09.10.1995
(51) Int. Cl.: H02G 15/184, H02G 15/103

(54) **ELECTRICAL EQUIPMENT**
ELEKTRISCHE VORRICHTUNG
EQUIPEMENT ELECTRIQUE

(30) Priority: 11.10.1994 GB 9420512
(43) Date of publication of application: 30.07.1997
(73) Proprietor: RAYCHEM GmbH, 85521 Ottobrunn (DE)
(72) Inventor: HAVERKAMP, Wolfgang, D-85625 Glonn (DE); KIERMAIER, Christian, D-85521 Ottobrunn (DE); HOFMANN, Jens, D-85579 Neubiberg (DE)
(74) Representative: Jones, David Colin
(86) International application number: GB9502386
(87) International publication number: WO9611521

(56) References cited:
- EP-A- 0 210 807
- WO-A-91/13756
- WO-A-92/08265

## Description

This invention relates to electrical equipment and in particular to equipment for use in regions of high electrical stress. For example, in a high voltage electric power cable (that is to say one for use at operating voltages in excess of 1kV, and generally at 10kV and above), the region around the exposed junction between the conductors of the two cables is an area of high electrical stress, since the electrical field-controlling effect of the cable dielectric, and of the cable screen if present. has to be removed in order physically and electrically to interconnect the conductors. The conductor connection is typically made by means of crimping, which can result in the formation of sharp edges which can act as a focus for electrical stress. This can lead to discharge activity that can be harmful to cable and joint materials, which may be polymeric, and which can in extreme circumstances lead to electrical breakdown of the joint. It will be appreciated that regions of high electrical stress occur elsewhere in cable joints and also in electrical apparatus other than joints, and the present invention is understood to have broader applicability other than to cable joints which are discussed by way of example only. Such other applications may include the enclosing of the interconnection between an electric cable and a piece of electrical equipment other than another cable.

It is an object of the present invention to provide electrical stress control at regions of high electrical stress in electrical equipment in a convenient manner.

The invention in one aspect thus provides electrical equipment. such as a cable joint, in which a conductive sleeve, acting as a stress-controlling Faraday Cage, is provided as a resilient seal around a high voltage connection. Insulation of the joint or other equipment may be provided by any suitable material, such as a curable system, oil or grease, or by a gel as defined for example in UK Patent Application No. 9414038.1, published on 25/01/96 as WO-A-96 02080.

In this aspect, the invention provides electrical equipment wherein an elongate high voltage electrically-conductive member extends from within an enclosing insulating layer, and wherein an electrically-conductive tubular member extends in close conformity over at least a part of the length of the insulating layer and encloses at least a part of the length of the conductive member in electrical connection therewith, the tubular member being of dual wall configuration such that it can be revolved into position.

By "revolve" is meant the ability of the tubular member to be rolled over a substrate substantially without relative sliding motion between a wall of the member adjacent the substrate and the substrate itself.

With the tubular member in close conformity with the insulating layer, it is capable of being arranged to exert a compressive force thereon.

The tubular member also encloses the conductive member and is in electrical connection therewith. Thus, the tubular member need not, but may, be in physical contact with the conductive member. It may, for example, be in physical contact with a further conductive component that is itself mounted on the conductive member.

In a preferred embodiment, the electrical equipment comprises a joint between two high voltage cables, wherein the said conductive member comprises a conductor of one of the cables and the said insulating layer comprises the dielectric layer of said one cable, wherein an electrical connector connects said one cable conductor to the conductor of the other cable, and wherein the tubular member extends across the joint in close conformity with the connector and so as to extend over at least part of the length of the dielectric layer of each cable.

When the cables are screened, the conductive tubular member is arranged to extend along part only of the exposed cable dielectrics so as to be longitudinally spaced from each cable screen, thereby avoid the formation of a short circuit.

Various apparatus and methods are known for controlling electrical stress in regions of electrical equipment, and EP-A-0210807 (corresponding to US Patent 4868967) discloses a double-walled tubular article that contains a friction-reducing medium, suitable for this purpose in the present invention. The friction-reducing medium allows the tube to be revolved along a substrate, such as an electric power cable, without buckling. The tube can be made from any suitable material, and for the present application, an elastomer is desirable as a base material, this being treated with a conductive filler in order to give the article a d.c. volume resistivity measured at 1kV and 20°C in accordance with IEC 93 of less than about 10⁴ ohm-cms and preferably of the order of 10² ohm-cm. Such an electrically conductive double-walled tubular article capable of revolving along a substrate is available from Raychem under its trade name RAYVOLVE. Such a conductive sleeve is capable of being applied over a cable conductor connection so as completely to enclose the length of the connector itself, which may be a metal crimp, and also so as to extend longitudinally therebeyond on each side partway along the dielectric of each cable. In this manner, the sleeve can function as a Faraday Cage, thus reducing the electric field to zero within its tubular enclosure. Any sharp edges in the junction region are thus completely electrically stress-controlled. The double-wall construction of such a revolving sleeve also provides a smooth, rounded profile at each end, where it sits on the cable dielectric, thus minimizing the opportunity for electrical discharge activity to occur in these regions.

Furthermore, the elastomeric nature of such a revolving sleeve, having a stretch ratio of, say, between 1.1:1 and 2:1, typically being about 1.7:1, can be utilised to exert an inwardly-directed radial pressure on its substrate, such as a cable conductor junction referred to above. This is particularly useful in the event of there being any fluid within the cable. It is sometimes found that electric power cables can contain air or water, for example. Such contaminants can enter the cable at its termination or through a damaged cable jacket, and can be pressurised and travel along the length of the cable. The contaminants can be found, for example, under pressure, between the conductor and its layer of insulation - even when the conductor is of a solid metal construction, but particularly when it is of stranded configuration, which is more conducive to 'wicking'. Should such contaminants pass out from a core at a cable joint, voids can be formed in this region of high electrical stress, thus leading to harmful electric discharge activity, and/or electrically-conductive paths can be formed between the cores of a multi-core cable and/or between a conductor (at high electrical potential) and a joint component at earth potential. The compressive effect of a revolving sleeve can thus tend to offset and advantageously to overcome an excess pressure internally of a cable core, retain any contaminant therewithin, and thus provide further electrical protection of the cable joint.

The containment of any contaminant, such as water, within a cable core, is also advantageous if there is any possibility that the contaminant could have an adverse effect on materials used in the construction of the joint. UK Patent Application Nos. 9414039.9, 9414038.1, 9414037.3, and 9414036.5 (now corresponding to PCT-GB 95/01623, PCT-GB 95/01624, PCT-GB 95/01625 and PCT-GB 95/01622 respectively), disclose various cable joint constructions in which the filler insulation around the conductor connector and contained within a pair of half-shells, comprises a gel material. The gel contains a large quantity of insulating oil bound by a polymer matrix, and thus it is advantageous to minimize exposure of the gel to water or other contaminants. This can conveniently be achieved by a revolving elastomeric sleeve as discussed above. These patent applications disclose examples of applications of the resilient. stress controlling sleeve, which has more general applications to cable joints of other construction and to other electrical equipment.

It will be appreciated that the compressive force of a resilient conductive sleeve, or tube, in a construction in accordance with the present invention will also ensure good electrical contact between the sleeve and the conductor connector, thus ensuring that there is no potential difference between the conductor and the sleeve.

The elastomeric property of the tube, or sleeve, also allows a single-size product to be used with cables of a range of diameters. This range-taking ability reduces the amount of inventory needed by the supplier, distributor or end user.

The dual wall tubular member is advantageously enclosed within a housing, which may be rigid, and the space therebetween may contain, and preferably is filled with, insulating material, which may comprise gel.

Advantageously, the tubular member is of such resilience that it can accommodate, at least partially, any thermal expansion and/or displacement of the insulating material. In the application of the present invention to a cable joint, for example, at higher voltages in excess of 1kV, and particularly in excess of 10kV, thermal cycling of the cable between powered and unpowered conditions can result in significant expansion of the cable itself and in a significant rise in temperature of its enclosing components, such as joint insulating material.

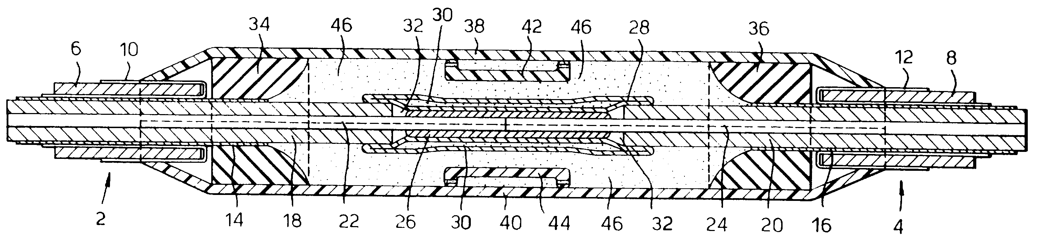

A cable joint, by way of example of the present invention, will now be described with reference to the attached drawing, which shows a sectional elevation of a gel-filled 15Kv polymeric electric cable joint.

Referring to the drawing, the in-line joint is formed between two substantially identical polymeric cables 2, 4. The respective outer jackets 6, 8, screen wires 10, 12, screen layers (semi conducting or conducting) 14, 16, primary dielectric layers 18, 20, and conductors 22, 24, are successively cut back in standard manner, with the screen wires 10, 12 being folded back over their respective jackets 6, 8 for subsequent interconnection (not shown) across the joint so as to maintain earth continuity. The conductors 22, 24 are electrically interconnected by means of a crimp connector 26, although any other suitable type of connector may be used.

Electrical stress control of the connection thus made is provided by a dual-wall tubular sleeve 28 of conductive elastomeric material and containing a friction - reducing medium 30, that extends around the connector 26 between the two cables and which longitudinally extends a short way over the dielectric layers 18, 20, being longitudinally spaced from the cable screen wires 10, 12. The sleeve 28 is mounted as a tight fit and makes electrical contact with the crimp 26 to ensure that the sleeve 28 and the conductive components enclosed therein are maintained at the same electrical potential, namely the potential of the cable conductors 22, 24. The sleeve 28 provides a Faraday Cage effect around the crimp 26 and exposed conductors 22, 24, sealing thereto and also sealing on to the cable dielectrics 18, 20. It will be appreciated that the annular regions 32 radially defined by the conductors 22, 24 and the sleeve 28 and longitudinally defined by cable dielectrics 18, 20 and the crimp 26 may contain air, water or other contaminants from within the cable cores 18, 22 and 20, 24. However such contaminants are not electrically damaging since they are contained in a region that is free of any electric field.

Stress-relief cones 34, 36 are provided for the respective cables 2, 4 and are located so as to provide a conical surface directed away from the cut back ends of respective shields 14, 16 in the usual manner. The stress cones 34, 36 are formed of a conductive rubber and are each provided as a pair of half cones for assembling around the cables 2, 4 after the electrical connection therebetween has been made.

The stress cones 34, 36 and Faraday Cage sleeve 28 are completely enclosed within a pair of outer hinged half shells 38, 40 made of conductive polymeric material, namely carbon-filled polypropylene, that fit together to form a cylindrical housing that clamps around the cables 2, 4 so as to seal down on to respective cable jackets 6, 8 to each side of the joint. An electrically insulating support cradle, formed as two semicylindrical rigid components 42, 44 is secured to the inner surface of the outer housing 38, 40, so as positively to locate the Faraday Cage 28 radially within the joint.

The space remaining within the housing 38, 40 around and within the cradle 42, 44, and around the Faraday Cage sleeve 28 and longitudinally bounded by the stress cones 34, 36, is completely filled with an electrically-insulating silicone gel 46.

As shown in the drawing, there exists an annular region between the outer surface of the revolving sleeve 28 and the inner surface of the support cradle 42, 44, which region is filled with gel 46. However, the rigid cradle 42, 44 serves to maintain a separation between the sleeve 28, which is at high voltage during operation of the joint, and the outer housing 38, 40, which is at earth potential, even when the joint is not linear as shown but deflected slightly into a curve, as it may be when buried underground. Furthermore, it will be appreciated that the size of that annular region may increase or may decrease virtually to zero in dependence on the diameter of the cables forming the joint.

It will be appreciated that the resilience of the elastomeric dual-wall sleeve 28 with its friction-reducing medium 30 is also advantageous in its ability, to a limited extent, to be compressed, in operation of the joint, and thus accommodate expansion of the gel 46 as its temperature increases.

The components of the joint are assembled by locating respective ones of the support cradle 42, 44 and the stress cones 34, 36 within respective housing half-shells 38, 40 pouring the gel 46 in liquid, un-cured form into each half shell up to its rim, and then allowing the gel to cure. The cables 2, 4 are then prepared by being cut back and the revolving sleeve 28 is revolved and stretched on to one of the cables 2, 4. The conductors 22, 24 are secured together by the crimp 26, and the sleeve 28 is revolved back along the cable so as to overlie the crimp 26 and adjacent portions of both cable dielectrics 18, 20. Insulation, stress relief, and screening are then provided simply by clamping the prepared housing half shells 38, 40 therearound. The securing together of the half-shells 38, 40 brings together the generally planar surfaces of each portion of the gel 46, which then provides a high dielectric strength interface, not only gel-to-gel where the half shells meet, but also on to the enclosed components of the cables 2, 4 such as the dielectrics 18, 20.

Further details and features of the general construction and assembly of such a joint are given in pending US Patent Application Serial Number 08/138360 (corresponding to International Patent Application Publication No. WO 95/11543) of Raychem Corporation.

It is thus seen that a resilient, compressive, electrically conductive member, whether it be a revolving or push-on sleeve, is able electrically to provide stress control as a Faraday Cage, maintaining good electrical contact with underlying conductive components, such as a conductor crimp connector, whilst at the same time counteracting any internal pressure within the cable core that could otherwise lead to the introduction of water, oil or other contaminants into the joint region.

## Claims

1. Electrical equipment wherein an elongate high voltage electrically-conductive member (22, 24) extends from within an enclosing insulating layer (18, 20), and wherein an electrically-conductive tubular member (28) extends in close conformity over at least a part of the length of the insulating layer and encloses at least a part of the length of the conductive member in electrical connection therewith, the tubular member being of dual wall configuration such that it can be revolved into position.

2. Electrical equipment according to claim 1, comprising a joint between two high voltage cables (2, 4), wherein the said conductive member comprises a conductor (22, 24) of one of the cables and the said insulating layer comprises the dielectric layer (18, 20) of said one cable, wherein an electrical connector (26) connects said one cable conductor to the conductor of the other cable, and wherein the tubular member (28) extends across the joint in close conformity with the connector (26) and so as to extend over at least part of the length of the dielectric layer (18, 20) of each cable.

3. Electrical equipment according to claim 2, wherein each cable is electrically screened, wherein each screen (10, 12; 14, 16) is cut back so as to expose the dielectric layer (18, 20) of each cable, and wherein the conductive tubular member (28) extends only partway along each cable dielectric layer.

4. Electrical equipment according to any one of the preceding claims, wherein the dual wall tubular member (28) comprises a dual wall elastomeric tube containing a friction-reducing medium (30) to facilitate its revolving movement.

5. Electrical equipment according to any one of the preceding claims, wherein the dual wall tubular member (28) is enclosed within a housing (38, 40) that contains insulating material (46).

6. Electrical equipment according to claim 5, wherein the housing is rigid and wherein the insulating material (46) comprises gel.

7. Electrical equipment according to claim 5 or claim 6, wherein the tubular member (28) is sufficiently resilient to accommodate, at least partially, any thermal expansion and/or displacement of the insulating material (46).

## Patentansprüche

1. Elektrische Einrichtung, bei der ein längliches, elektrisch leitfähiges Hochspannungs-Element (22, 24) sich aus einer umschließenden Isolierschicht (18, 20) heraus erstreckt und bei der sich ein elektrisch leitfähiges, rohrförmiges Element (28) in enger Anpassung wenigstens über einen Teil der Länge der Isolierschicht erstreckt und wenigstens einen Teil der Länge des leitfähigen Elements in elektrischer Verbindung mit diesem umschließt, wobei das rohrförmige Element eine doppelwandige Konfiguration aufweist, so daß es in seine Position gerollt werden kann.

2. Elektrische Einrichtung nach Anspruch 1,
mit einer Verbindung zwischen zwei Hochspannungskabeln (2, 4), wobei das genannte leitfähige Element einen Leiter (22, 24) von dem einen der Kabel aufweist und die Isolierschicht die dielektrische Schicht (18, 20) des einen Kabels aufweist, wobei ein elektrischer Verbinder (26) den einen Kabelleiter mit dem Leiter des anderen Kabels verbindet, und wobei sich das rohrförmige Element (28) in enger Anpassung an den Verbinder (26) über die Verbindung sowie derart erstreckt, daß es sich wenigstens über einen Teil der Länge der dielektrischen Schicht (18, 20) jedes Kabels erstreckt.

3. Elektrische Einrichtung nach Anspruch 2,
wobei jedes Kabel elektrisch abgeschirmt ist, wobei jede Abschirmung (10, 12; 14, 16) derart zurückgeschnitten ist, daß die dielektrische Schicht (18, 20) jedes Kabels freiliegt, und wobei sich das leitfähige rohrförmige Element (28) nur teilweise entlang der dielektrischen Schicht jedes Kabels erstreckt.

4. Elektrische Einrichtung nach einem der vorausgehenden Ansprüche,
wobei das doppelwandige rohrförmige Element (28) einen doppelwandigen elastomeren Schlauch aufweist, der ein reibungsreduzierendes Medium (30) enthält, um seine Umrollbewegung zu erleichtern.

5. Elektrische Einrichtung nach einem der vorausgehenden Ansprüche,
wobei das doppelwandige rohrförmige Element (28) in einem Gehäuse (38, 40) eingeschlossen ist, das Isoliermaterial enthält (46).

6. Elektrische Einrichtung nach Anspruch 5,
wobei das Gehäuse starr ist und wobei das Isoliermaterial (46) Gel aufweist.

7. Elektrische Einrichtung nach Anspruch 5 oder Anspruch 6, wobei das rohrförmige Element (28) ausreichend elastisch ist, um wenigstens teilweise jeglicher wärmebedingten Expansion und/oder Verlagerung des Isoliermaterials Rechnung zu tragen.

## Revendications

1. Equipement électrique dans lequel un élément allongé, (22, 24), électriquement conducteur, pour haute tension, s'étend depuis l'intérieur d'une couche isolante enveloppante (18, 20), et dans lequel un élément tubulaire (28), électriquement conducteur, s'étend en conformité étroite sur au moins une partie de la longueur de la couche isolante et renferme au moins une partie de la longueur de l'élément conducteur en connexion électrique avec lui, l'élément tubulaire étant d'une configuration à paroi double afin qu'il puisse être amené en position en étant retourné.

2. Equipement électrique selon la revendication 1, comportant une jonction entre deux câbles (2, 4) à haute tension, dans lequel ledit élément conducteur comprend un conducteur (22, 24) de l'un des câbles et ladite couche isolante comprend la couche diélectrique (18, 20) dudit câble, dans lequel un connecteur électrique (26) connecte ledit conducteur du câble au conducteur de l'autre câble, et dans lequel l'élément tubulaire (28) s'étend à travers la jonction en conformité étroite avec le connecteur (26) et de façon à s'étendre sur au moins une partie de la longueur de la couche diélectrique (18, 20) de chaque câble.

3. Equipement électrique selon la revendication 2, dans lequel chaque câble est blindé électriquement, dans lequel chaque blindage (10, 12 ; 14, 16) est découpé vers l'arrière afin de mettre à nu la couche diélectrique (18, 20) de chaque câble, et dans lequel l'élément tubulaire conducteur (28) ne s'étend que partiellement le long de la couche diélectrique de chaque câble.

4. Equipement électrique selon l'une quelconque des revendications précédentes, dans lequel l'élément tubulaire (28) à paroi double comprend un tube élastomère à paroi double contenant un milieu (30) de réduction de frottement pour faciliter son mouvement de retournement.

5. Equipement électrique selon l'une quelconque des revendications précédentes, dans lequel l'élément tubulaire (28) à paroi double est enfermé à l'intérieur d'un corps (38, 40) qui contient une matière isolante (46).

6. Equipement électrique selon la revendication 5, dans lequel le corps est rigide et dans lequel la matière isolante (46) comprend un gel.

7. Equipement électrique selon la revendication 5 ou la revendication 6, dans lequel l'élément tubulaire (28) est suffisamment élastique pour s'adapter, au moins partiellement, à toute dilatation thermique et/ou à tout déplacement de la matière isolante (46).
